# EUROPEAN PATENT SPECIFICATION

(11) **EP 2 503 111 B1**
(45) Date of publication and mention of the grant of the patent: **02.03.2016**
(21) Application number: 11159919.7
(22) Date of filing: 25.03.2011
(51) Int. Cl.: F01K 3/18, F01K 13/00, F01K 23/06, F01K 23/10, F01K 25/08, F22B 1/18

(54) **Modular heat rejection system, direct organic rankine cycle system, and biomass combined cycle power generating system**
Modulares Wärmeausgabesystem, direktes organisches Rankine-Kreislaufsystem und biomassenkombiniertes Kreislaufstromerzeugungssystem
Système de rejet de chaleur modulaire, système de cycle de Rankine organique direct et système de génération d'énergie à cycle combiné avec la biomasse

(43) Date of publication of application: 26.09.2012
(73) Proprietor: Caterpillar Motoren GmbH & Co. KG, 24159 Kiel (DE)
(72) Inventor: Reeh, Jens-Uwe, 24220 Flintbek (DE)
(74) Representative: Kramer Barske Schmidtchen Patentanwälte PartG mbB

(56) References cited:
- US-A- 3 686 867
- US-A1- 2010 251 729

## Description

### Technical Field

The present disclosure generally refers to power generation from waste heat and more particularly to using an organic Rankine cycle (ORC) for converting waste heat of multiple waste heat sources to electric power.

### Background

The efficiency of generating power with, e.g., a combustion engine can be increased, for example, by additionally generating power from waste heat of the combustion engine, such as the heat of exhaust gas. Similarly, the generation of power from waste heat is used in combined cycle power generation, which combines the generation of power from steam or combustion turbines with at least one additional stage deriving power from waste heat of the steam or combustion turbine using, e.g. an ORC.

Herein the term "combined cycle" is to be understood to include the combination of an ORC with combustion based power generating systems, such as combustion engines, e.g. gas or liquid fuel genset, as well as the combination of an ORC with steam or combustion turbine based power generating systems.

To efficiently generate energy from low-temperature waste heat, ORC technology has been developed. ORC uses a working medium that changes into gas phase at the available temperature of the waste heat and is used to drive an ORC turbine. In general, there are two types of ORC:

Indirect ORC uses an intermediate liquid cycle to transfer the waste heat to the working medium, whereby the working medium circulates in a closed cycle of an ORC unit. These types of system are referred to as closed loop ORC systems.

In contrast, direct ORC (also referred to as open loop ORC) heats the working medium directly with the waste heat. Direct ORC systems are disclosed, for example, in US 2007/0240420 A1 and US 2008/0289313 A1. Similarly, US 3,686,867 discloses a regenerative Rankine cycle power plant with two steam generator members each comprising a steam drum.

The present disclosure is directed, at least in part, to improving or overcoming one or more aspects of prior systems.

### Summary of the Disclosure

According to an aspect of the present disclosure, a modular heat rejection system configured for being connected to an organic Rankine turbine module to form a direct organic Rankine cycle, the modular heat rejection system may comprise a vapor separator for separating a gaseous phase from a liquid phase of a heated working medium, the vapor separator having at least one heated working medium inlet, at least one gaseous phase outlet for the separated working medium gaseous phase, and at least one liquid phase outlet for the separated working medium liquid phase; at least two boiler sub-systems comprising a pump and a boiler and each of the boiler sub-systems being fluidly connected to the at least one liquid phase outlet of the vapor separator and the at least one heated working medium inlet of the vapor separator.

According to another aspect of the present disclosure, a direct organic Rankine cycle system may comprise a modular heat rejection system as described above; and an organic Rankine turbine module.

According to another aspect of the present disclosure, a biomass combined cycle power generating system may comprise a pyrolysis reactor generating pyrolysis gas and pyrolysis oil from biomass; a pyrolysis gas engine for generating power from the pyrolysis gas, thereby producing waste heat; a pyrolysis oil engine for generating power from the pyrolysis oil, thereby producing waste heat; and a direct organic Rankine cycle system as described above for generating power from the waste heat of the pyrolysis gas engine and the waste heat of the pyrolysis oil engine and direct the organic Rankine cycle system comprising a modular heat rejection system, wherein the waste heat of the pyrolysis gas engine is supplied to a first boiler of the modular heat rejection system and the waste heat of the pyrolysis oil engine is supplied to a second boiler of the modular heat rejection system, thereby heating a working medium for driving a single organic Rankine turbine module.

In some embodiments of the above aspects, at least one of the boilers of boiler sub-systems may be configured for heating the working medium with waste heat, e.g., of exhaust gas of a combustion engine and/or with waste heat of a high temperature cooling cycle of a combustion engine.

In some embodiments of the above aspects, at least one of the boilers of the plurality of boiler sub-systems may comprise a super-heating system connected with the at least one gaseous phase outlet, the super-heating system configured for super-heating the separated working medium gaseous phase before providing the super-heated separated working medium gaseous phase to the organic Rankine turbine module.

In some embodiments of the above aspects, at least one of the boilers of the plurality of boiler sub-systems is a Lamont boiler.

In some embodiments of the above aspects, the modular heat rejection system may further comprise at least one control unit for controlling the circulation speed of the working medium through the boiler sub-systems. The control unit may be configured to control the pumps of the boiler sub-systems.

In some embodiments of the above aspects, the working medium is selected from the group of organic working media comprising saturated and unsaturated hydrocarbons, fluorated hydrocarbons, silicon oils such as siloxane, ammonia, and ammonia-water mixture.

In general, using direct ORC systems as disclosed herein, which are based on, e.g., heat from the exhaust gas or a charge air cooling system of a combustion engine, may result in a gain in efficiency of, e.g., about 10% in addition to the efficiency of the conventional combustion engine(s) generated power.

In view of the large expense of an ORC system, combining several heat sources within a modular concept for the heat rejection cycle of the working medium may reduce the cost for implementing ORC based generation of power from waste heat.

In addition, various types of heat sources such as high temperature charge air cooling systems can alternatively or additionally be used to preheat the working medium.

In view of the fact that heating the working medium directly has to be performed in a manner that does not affect the working medium itself, e.g. causes polymerization, a control concept is disclosed herein for controlling direct ORC. The control concept may avoid or at least reduce the amount of overheating of the working medium and, thereby, provide long term use of the working medium.

Other features and aspects of this disclosure will be apparent from the following description and the accompanying drawings.

### Brief Description of the Drawings

Fig. 1 is a schematic overview of a combined system including a direct ORC system using the waste heat of three gensets;
Fig. 2 is a schematic overview of a combined system for a pyrolysis-based power plant including a direct ORC system using waste heat from a gas genset and a liquid genset;
Fig. 3 is a schematic illustration of a direct ORC system with a modular heat rejection system and an ORC turbine module;
Fig. 4 is a schematic diagram illustrating a direct ORC system with a modular heat rejection system comprising three heat rejection modules;
Fig. 5 is a schematic illustration of a direct ORC system including a super-heating zone;
Fig. 6 is a schematic illustration of a direct ORC system including pre-heating of a working medium before being supplied to the modular heat rejection system and a super-heating zone; and
Fig. 7 is a schematic illustration of an air system and a cooling system of a genset.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that to increase the efficiency of a power plant, e.g. a biomass based power plant, the waste heat of various gensets or various types of waste heat of one or more genset may be turned into electric power via a common organic Rankine cycle.

Combining multiple waste heat sources via a modular heat rejection cycle as disclosed herein may be based on a common vapor separator and a common ORC turbine module with a turbine and a regenerator.

The common vapor separator may be connectable to the common ORC turbine module to provide the gas phase of the working medium to the turbine and to receive the working medium after regeneration of the working medium with the regenerator of the ORC turbine module.

To allow using heat of a plurality of waste heat sources, the common vapor separator may be configured such that a plurality of parallel heat rejection cycles share the common vapor separator. For example, each heat rejection cycle may comprise its own pump and boiler and provide a heating cycle that begins and ends at the common vapor separator. As each heat rejection cycle may have its own pump, the flow within the heat rejection cycles may be adjusted as described herein for protecting the working medium.

For example, to avoid overheating and, thereby, decomposing of the working medium, a control concept as described herein may adjust the circulation rate within the heat rejection cycle to a value of 1.3 to 1.5. Thereby, a value of 1.0 is defined as a circulation rate that results in heating the working medium such that 100% of the working medium changes into the gas phase, i.e. the complete amount of working medium that passes through a boiler is evaporated. Accordingly, a value above 1.0 indicates that more working medium is circulated. As an example, for a value of 1.30, 130 % of the amount of working medium, which correspond to the value of 1.00, are circulated. This corresponds to operating the heat rejection cycles under the Lamont principle. For example, the boiler may be considered to be operated as a Lamont boiler.

As an example, the control strategy as described herein may operate the heat rejection cycles under the condition that at least 30% of the working medium that passes through a boiler is maintained in the liquid phase. Then, an energy buffer may be provided in form of the not yet evaporated working medium such that in case the temperature is further increased the liquid phase can receive that energy.

Specifically, the control concept may control the pump speed within the heat rejection cycles to a value that may provide a time of the working medium within the heat rejection cycle that results in a preset ratio of the fluid and gas phase of the working medium at the exit of the boiler.

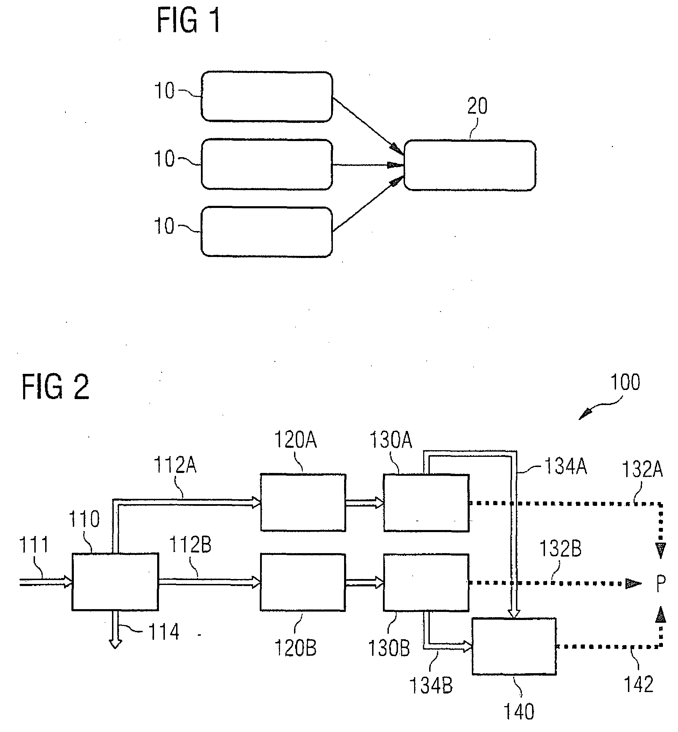

In the following and with reference to Figs. 1 to 7, various embodiments of direct ORC systems and their implementation in combined power generating systems are disclosed.

As illustrated in Fig. 1, multiple gensets 10 may provide waste heat to a direct ORC system 20. Specifically, a single genset 10 may provide different types of waste heat to direct ORC system 20 such as heat of exhaust gas, heat of a coolant of a charge-air cooling system, e.g. a high-temperature charge-air coolant cycle and/or a low-temperature charge-air coolant cycle, and heat of jacket water.

While in principle for a fuel combustion engine, as an example of gensets 10, about 50% of the energy input in form of fuel may be transferred into mechanical output, using waste heat, e.g., of the exhaust gas and/or the charge-air coolant system for a secondary power generation based on an ORC system may result in an increase of e.g. additional 10% of the engine generated power, i.e. in this example additional 5 % of the energy input may be transferred into electricity.

The general concept of applying ORC to multiple gensets 10 is described in the following in connection with Fig.2.

Fig. 2 shows a flow chart for a pyrolysis-based power plant 100 as an example of a power system using biomass integrated liquidation. Pyrolysis-based power plant 100 may be adapted to include an ORC system using waste heat.

Pyrolysis-based power plant 100 may include a pyrolysis reactor 110 that is provided with biomass 111 such as wood or agricultural waste (e.g. stalks of wheat or corn, grass, wood, wood shavings, grapes, and sugar cane). Using, for example, flash-pyrolysis, pyrolysis reactor 110 may generate pyrolysis gas 112A, pyrolysis oil 112B , and char 114. Flash-pyrolysis is a specific type of conventional slow pyrolysis that is performed with the task to maximize te liquid fraction (here pyrolysis oil).

Pyrolysis gas 112A and pyrolysis oil 112B may be provided to conditioning units 120A, 120B. The PCT application PCT/EP2010/002114 of Caterpillar Motoren GmbH & Co. KG filed on 1. April 2010 discloses an exemplary method for preparing (conditioning) pyrolysis oil for an internal combustion engine. The conditioning of the pyrolysis gas may include, for example, cleaning, cooling, and compressing the pyrolysis gas.

Conditioned pyrolysis gas 112A and conditioned pyrolysis oil 112B may be used as fuel for a gas genset 130A and a liquid genset 130B, respectively.

Gensets 130A and 130B may each provide an electricity output 132A, 132B, respectively. Gas genset 130A may be, for example, a conventional gas engine adapted to run with pyrolysis gas. Liquid genset 130B may be, for example, a conventional diesel engine adapted to run with pyrolysis oil.

In addition, gas genset 130A and liquid genset 130B may generate one or more types of waste heat outputs 134A and 134B, respectively. Waste heat outputs 134A and 134B may be provided to an organic Rankine system 140 that uses the waste heat outputs 134A and 134B to additionally provide an electricity output 142.

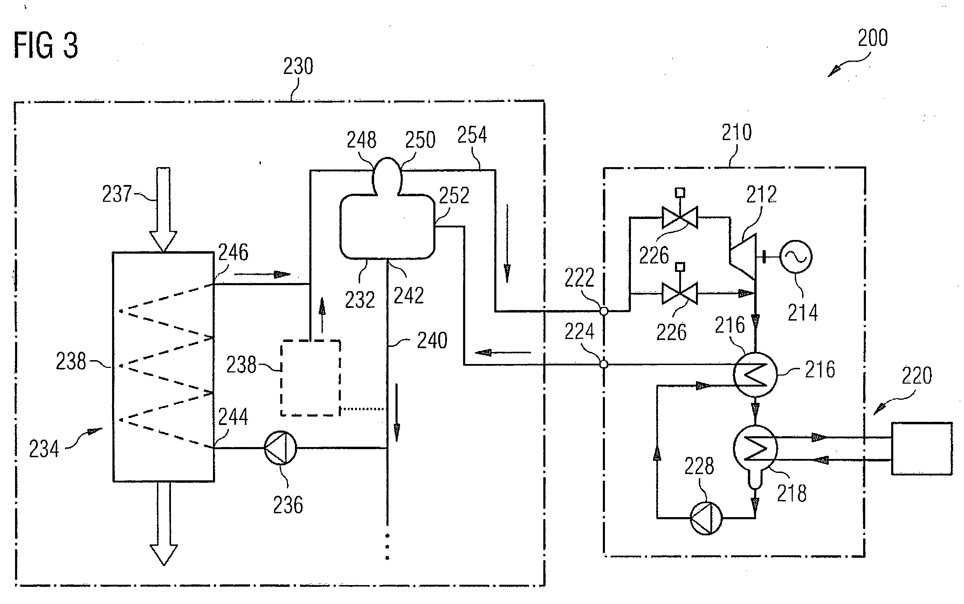

Organic Rankine system 140 may be based on a direct ORC system, examples of which are described in the following connection with Figs. 3 to 6. Specifically, direct ORC systems may be based on a modular concept.

Referring to Fig. 3, an exemplary direct ORC system 200 of a modular concept may include an ORC turbine module 210 and a modular heat rejection system 230.

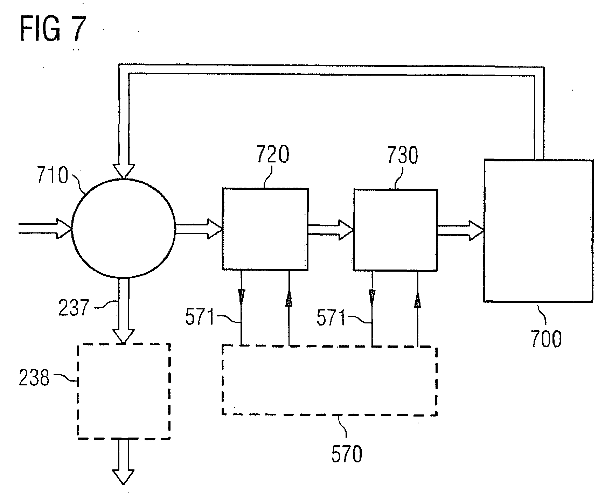

Direct ORC system 200 may be configured such that in a closed cycle, a working medium passes through ORC turbine module 210 and modular heat rejection system 230. Accordingly, the heating of the working medium is performed directly within modular heat rejection system 230 from one ore more waste heat types of one or more gensets (see also Fig. 7).

The ORC working medium is of organic nature instead of water (water steam). Examples of the working medium include saturated and unsaturated hydrocarbons, fluorated hydrocarbons, silicon oils such as siloxane, ammonia, and ammonia-water mixture. The type of working medium defines inter alia the temperature range in which the ORC may be performed. Silicone base fluids may, for example, be applied with pyrolysis-based power plant 100.

Referring again to Fig. 3, ORC turbine module 210 may include a turbine 212 for driving a generator 214. ORC turbine module 210 may further include a regeneration unit 216 and a condenser unit 218.

Regeneration unit 216 may transfer heat of the working medium being still in the gaseous phase after having driven turbine 212 to regenerated working medium in the liquid phase.

Condenser unit 218 may be connected to a water cycle 220 and further cool down and condense the working medium until it is in the liquid phase again.

ORC turbine module 210 may further include one or more control valves 226 and one or more pumps 228.

ORC turbine module 210 may further include a working medium inlet 222 and a working medium outlet 224 for a fluid connection between a working medium cycle section within in ORC turbine module 210 and a working medium cycle section within modular heat rejection system 230.

Modular heat rejection system 230 may include a common vapor separator 232 with an inlet 252 and a plurality of boiler sub-systems 234.

For connecting the working medium cycle section within in ORC turbine module 210 and the working medium cycle section within modular heat rejection system 230, working medium outlet 224 of ORC turbine module 210 may be fluidly connected to inlet 252 of vapor separator 232.

Vapor separator 232 may be configured for separating a gaseous phase from a liquid phase of working medium that was heated in boiler sub-systems 234.

Before being supplied to boiler sub-systems 234, the working medium returned from ORC turbine module 210 may be mixed with the separated liquid working medium having passed boiler sub-systems 234.

Each boiler sub-system 234 may include a pump 236 and a boiler 238. Boiler 238 may be configured for transferring heat of a waste heat output of a genset such as exhaust gas 237 or cooling water of an increased temperature onto the working medium. One or more boiler sub-system 234 may be operated according to the Lamont principle. Then, boiler 238 of boiler sub-systems 234 may be considered a Lamont boiler.

Operating boiler sub-systems 234 according to the Lamont principle may provide a fast response time with respect to changes in the heat transfer conditions within respective boiler sub-systems 234. This may be based on a low pipe wall temperature and good alpha-values associated with the heat transfer. Lamont boiler may further be based on small size pipes, which may also positively affect the response time. These advantages may in particular apply to the concept of adjusting the circulation rate within the heat rejection cycle to a value of 1.3 to 1.5.

In the exemplary embodiment shown in Fig. 3, boiler sub-systems 234 may be fluidly connected to vapor separator 232 via one or more boiler sub-system connection lines 240.

For boiler sub-systems 234 shown in detail in Fig. 3, a separator outlet 242 of vapor separator 232 may be connected to a pump 236 boiler sub-systems 234 via boiler sub-system connection line 240. Pump 236 may be connected to a boiler inlet 244 of boiler 238. A boiler outlet 246 of boiler 238 may be connected to a separator inlet 248 of vapor separator 232.

A gas phase outlet 250 of vapor separator 232 may be connected via a connection line 254 to working medium inlet 222 of ORC turbine module 210 such that the gaseous phase working medium may be provided to turbine 212 for driving generator 214, thereby closing the working medium cycle.

During operation, exhaust gas at a temperature of e.g. 310°C and a mass of e.g. 75000-112000 kg/h may be supplied through boiler 238. Pump 236 may pump the working medium through boiler 238 such that the working medium partially changes into the gas phase and a mixture of working medium in the gaseous phase and the liquid phase is generated. The exhaust gas may exit boiler 238 at a temperature of about 180°C.

As an example of the temperature development of the working medium, the working medium may exit ORC turbine module 210 at a temperature of about 170°C and may be heated in boiler 238 to a temperature of about 250°C in a mixed state of the working medium being partially in a gaseous phase and partially in a liquid phase. After the separation in vapor separator 232, the gaseous working medium enters the ORC turbine module 210 at a temperature of about 250°C.

The mixture of gas phase and liquid phase of the heated working medium may be supplied to and separated in vapor separator 232 so that only the gas phase may be provided to ORC turbine module 210.

During operation of ORC turbine module 210, turbine 212 may drive generator 214 by the gaseous working medium, which thereby expends and decreases in temperature. Downstream of turbine 212, working medium may pass regeneration unit 216, in which heat of the still gaseous working medium may be transferred to the liquid working medium, which has been generated in condenser 218 from the gaseous phase of the working medium using water cycle 220.

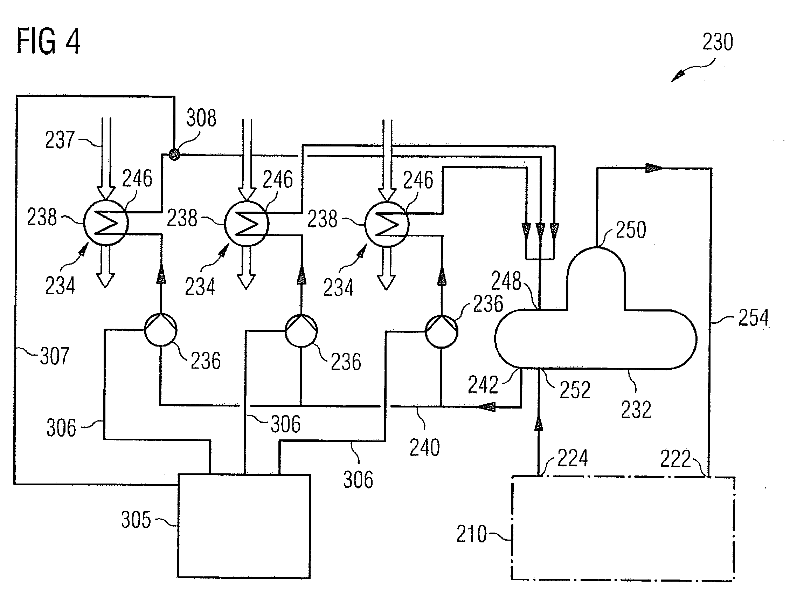

As indicated in Fig. 3, additional boiler sub-systems 234 may be fluidly connected to vapor separator 232. Specifically, distributing the working medium to additional boiler sub-systems 234 may be performed via boiler sub-system connection line 240 (see also Fig. 4).

For a direct ORC system with three boiler sub-systems 234, Fig. 4 illustrates the flow of the working medium within boiler sub-systems 234. Moreover, Fig. 4 illustrates the control of pumps 236 of boiler sub-systems 234.

Specifically, beginning at outlet 224 of ORC turbine module 210, regenerated working medium may be provided to vapor separator 232, specifically through inlet 252, and mixed in vapor separator 232 with the working medium originating from the separation process of vapor separator 232. Alternatively, or in addition, the regenerated working medium and the separated working medium may be mixed external to vapor separator 232.

Referring again to Fig. 4, at outlet 242, working medium may exit vapor separator 232 along boiler sub-system connection line 240, which may distribute the working medium to three boiler sub-systems 234, each including at least one pump 236 and at least one boiler 238.

Pumps 236 may be controlled via a control unit 305 to adjust the circulation speed of the working medium through boilers 238 such that at least 15%, 20%, 30%, 40%, or 50% of the working medium are maintained in the liquid phase when exiting boiler 238. For that purpose, control unit 305 may receive information of physical parameters (such as temperature and pressure) of the working medium after the heating process in boilers 238. For example, respective sensors may be provided at outlets 246. Alternatively or in addition, control unit may receive information on the current performance and/or future performance of the gensets.

As an example, in some embodiments, a load /temperature depending flow curve table may provided in control unit 305. The load refers to the load of the genset of which the waste heat is used in the respective boiler sub-system. The temperature refers to the temperature of the working medium measured within the working medium loop of that respective boiler sub-system. Fig. 4 shows schematically a temperature measurement line 307 connecting control unit 305 with a temperature sensor 308 installed downstream of boiler 238. In Fig. 4, only one temperature measurement line 307 is shown exemplarily. In general, temperature measurement lines may be provided for one or more boiler sub-systems.

The load /temperature depending flow curve may be used to control the speed of pump 236 within a predefined range of throughput through boiler 238. Accordingly, control unit 305 may assess the parameter load of the genset and temperature of the working medium and derives there from a control parameter for controlling the pump speed. The control output parameter may be limited such that the speed of pump 236 may only be adjustable within a range of, e.g., 70-100%.

Control unit 305 may comprise a memory unit for providing load /temperature depending flow curve tables for each of the boiler sub-systems. Control system may further be connected via control lines 306 to pumps 236 of each of the boiler sub-systems.

In general, control unit 305 may allow adjusting individually the circulation speed for each boiler and associated waste heat source such that the working medium is protected, e.g., from thermal decomposition.

For example, increases the temperature of the working medium towards a preset temperature limit, the pump speed may be increased as well. Similarly, is the load of the genset increased, an increase of, e.g., the exhaust gas temperature may be expected and, accordingly, the pump speed can be increased to avoid, limit or at least slow down the increase of temperature of the working medium.

Referring again to Fig. 4, waste heat from, for example, three gensets such as combustion engines, e.g. diesel or gas engines, may be transferred onto the working medium in boilers 238. The heated working medium may then be combined and provided to inlet 248 of vapor separator 232.

Vapor separator 232 may separate the gaseous phase of the working medium from the liquid phase and provide the gaseous phase via outlet 250 and line 254 to inlet 222 of ORC turbine module 210.

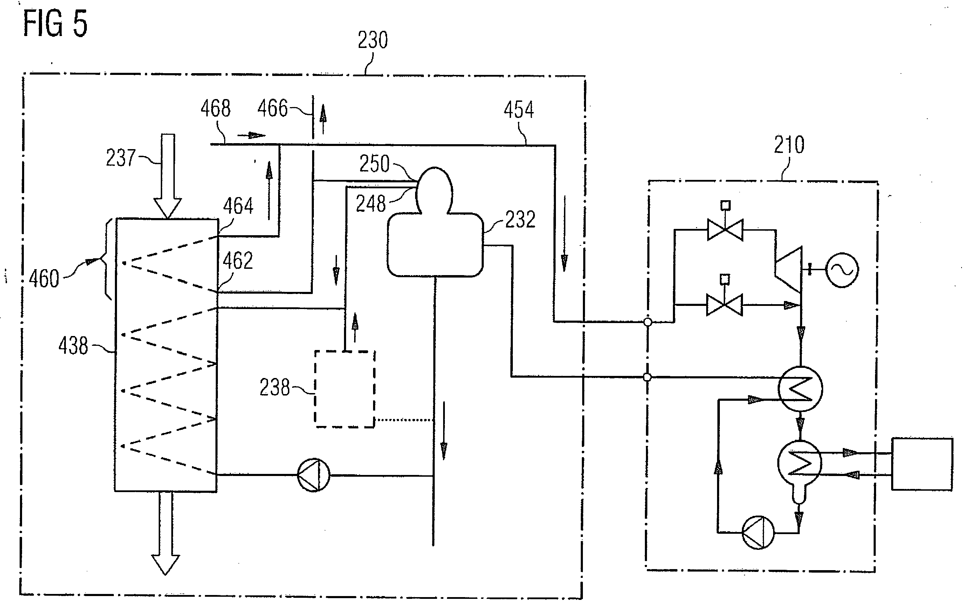

An embodiment of a boiler for modular heat rejection system 230 is described in connection with Fig. 5. Specifically, heat rejection system 230 may include a boiler 438 that includes a superheating zone 460.

In the embodiment shown in Fig. 5, ORC turbine module 210 as well as the heat transfer in boiler sub-systems 234 onto the liquid phase working medium may work essentially as described in connection with Figs. 3 and 4.

The embodiment shown in Fig. 5 distinguishes from the system shown in Fig. 3 downstream of gaseous phase outlet 250 of vapor separator 232. Instead of being directly connected to ORC turbine module 210, gaseous phase outlet 250 may be connected to an inlet 462 of superheating zone 460 of boiler 438. In Fig. 5, several reference signs for features, which essentially maintain unchanged with respect to the embodiment of Fig. 3, were nor reproduced to increase clarity of the illustration.

In superheating zone 460, the gaseous phase working medium is superheated by the waste heat of e.g. exhaust gas 237 entering boiler 438. Superheated gaseous phase working medium may exit superheating zone 460 at outlet 464, which may then be fluidly connected to inlet 222 of ORC turbine module 210, such that the gaseous phase working medium may be provided at a higher temperature to increase the efficiency of turbine 212.

As indicated in Fig. 5, additional boiler sub-systems 234 may include boilers 438 with superheating zones 460. Accordingly, gaseous phase may be distributed to additional superheating zones as indicated by line 466. In that case, superheated gaseous phase working medium exiting additional superheating zones 460 at outlet 464 may be combined with superheated working medium from other superheating zones as indicated by line 468.

Similarly, as indicated in Figs. 3 and 4, additional boiler sub-systems 234 may be provided such that heat working medium is combined before entering vapor separator 232 at inlet 248.

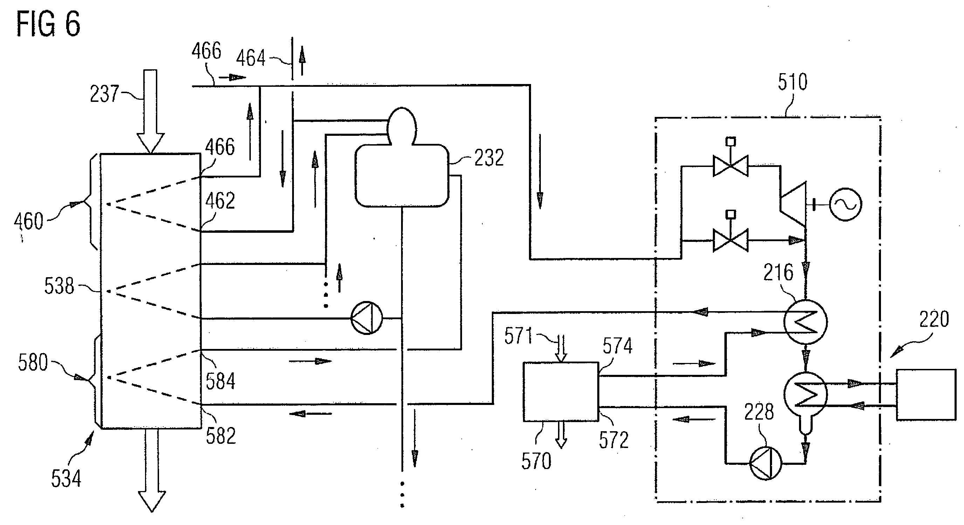

An embodiment of a direct ORC system using intensified preheating of the working medium is described in connection with Fig. 6. In Fig. 6, several reference signs for features, which essentially maintain unchanged with respect to the embodiment of Figs. 3 and 4, were nor reproduced to increase clarity of the illustration.

Fig. 6 shows a direct ORC system that includes an ORC turbine module 510 and a boiler sub-system 534 including a superheating zone as described in connection with Fig. 5.

In addition to the preheating discussed already in connection with Fig. 3 and regeneration unit 216, the embodiment of Fig. 6 shows two types of preheating of the regenerated working medium: a heat transfer unit 570 interacting with ORC turbine module 510 and a preheating zone 580 of boiler sub-system 534. One or more of those types of preheating may be performed to adapt the temperature of the working medium coming from ORC turbine module 510 to the temperature of the separated liquid phase working medium provided by vapor separator 232.

In the section of the working medium cycle with ORC turbine module 510, preheating with a low temperature heat source such as, for example, a high-temperature or low-temperature cooling circuit of a combustion engine (see also Fig. 7) may be implemented.

Specifically, heat transfer unit 570 may receive heat from a coolant medium 571 of a coolant cycle of a genset, e.g. a combustion engine, and transfer that heat to the regenerated working medium exiting pump 228. For that purpose, heat transfer unit 570 may be fluidly connected with pump 228 and regeneration unit 216.

The working medium exiting condenser at a temperature of, e.g., about 50°C may be heated in heat transfer unit 570 to a temperature of, e.g., about 120°C. Thereafter, the working medium may be further heated by regeneration unit 216 to a temperature of, e.g., about 190°C.

In the section of the working medium cycle within boiler sub-systems 534, preheating may be performed using, e.g., the low-temperature section of at least one boiler 538 of boiler sub-systems 524. Specifically, before entering vapor separator 232, the working medium may pass preheating zone 580. E.g., outlet 224 of ORC turbine module 510 may be fluidly connected with inlet 582 of preheating zone 580. The preheated working medium may leave preheating zone 580 at outlet 584 at a temperature of, e.g., about 260°C.

Outlet 584 may be fluidly connected to inlet 252 of vapor separator 232 in which the preheated working medium is mixed with the separated liquid phase working medium being also at a temperature of, e.g, 260°C.

As described in connection with Figs. 3 and 4, boiler 538 may provide a heating cycle of the liquid working medium controlled by pump 236 such that the circulation speed of the working medium may provide the working medium to vapor separator 232 in a gas liquid mixed state.

As described in connection with Fig. 5, the separated gas phase may be provided to superheating zone 460 of boiler 538 to further heat the gaseous phase working medium, for example, to a temperature of, e.g., 270°C before providing the super-heated gaseous phase working medium to turbine 212.

Exemplarily, waste heat sources of a genset for the direct organic Rankine cycle systems disclosed herein are illustrated in Fig. 7 based on a schematic medium-sized diesel or gas engine.

Specifically, Fig. 7 shows an exemplary air system and cooling systems of a conventional combustion engine 700 such as gas engine 130A or liquid fuel engine 130B used in pyrolysis-based power plant 100 described in connection with Fig. 2. In Fig. 7, dual line arrows refer to the air system, e.g. stream of the charge air and exhaust gas, and single line arrows refer to the cooling systems, e.g. the stream of a coolant medium, usually water.

Engine 700 may comprise a turbocharger system 710 (single or double stage), a high temperature cooling circle 720, and a low temperature cooling circle 730.

Assuming an initial temperature of the charge air of 25°C, the compression of the charge air in turbocharger system 710 may increase the temperature of the charge air from 25°C to 225°C. High temperature cooling circle 720 may reduce the temperature of the charge air from 225°C to 90°C and low temperature cooling circle may reduce the temperature of the charge air further from 90°C to 45°C such that engine 700 is charged with air at a temperature of about 45°C.

After the combustion process, exhaust gas at a temperature of several hundred degrees may exit the combustion chamber and may be used to drive turbocharger system 710. After turbocharger system 710, the temperature of the exhaust gas may be reduced to about 310°C.

In general, heat can be recovered from coolant medium 571 of high temperature cooling circle 720 and/or low temperature cooling circle 730 as well as from high temperature exhaust gas 237 before or after turbocharger system 710.

As an example, boiler 238 is indicated to use the waste heat of exhaust gas 237 after turbocharger system 710 and heat transfer unit 570 is indicated to use the waste heat of coolant medium 571 of high temperature cooling circle 720 and/or low temperature cooling circle 730.

Further aspects of the invention may include a combined cycle power generating system that may comprise at least one genset for generating power having at least two waste heat sources; a direct organic Rankine cycle system with a working medium, the direct organic Rankine cycle system comprising a modular heat rejection system and an organic rankine turbine module; wherein the modular heat rejection system comprises a common vapor separator and a boiler sub-system associated to each of the at least two waste heat sources, and each boiler sub-system is configured to transfer heat of the respective waste heat source to the working medium, and the vapor separator is configured to derive a working medium gaseous phase from the working medium exiting each of the boiler sub-systems and provide the working medium gaseous phase to the organic Rankine turbine module for power generation.

According to an aspect of the present disclosure, a direct organic Rankine cycle system for generating power using a working medium may comprise a boiler sub-system comprising a pump and a boiler, the pump configured to pump the working medium through the boiler; a vapor separator connected to a working medium outlet of the boiler and configured for separating a gaseous phase of the working medium; an organic Rankine turbine module fluidly connected to the vapor separator, the organic Rankine turbine module comprising a turbine driven by the separated working medium gaseous phase; a control system configured to control the pump for adjust the circulation speed of the working medium through the boiler such that at least 15%, 20 %, 30 %, 40 %, or 50% of the working medium are maintained in the liquid phase when exiting the boiler.

According to another aspect of the present disclosure, a biomass combined cycle power generating system may comprise a pyrolysis reactor generating pyrolysis oil and pyrolysis gas from biomass; a pyrolysis oil engine for generating power from the pyrolysis oil, thereby producing waste heat; a pyrolysis gas engine for generating power from the pyrolysis gas, thereby producing waste heat; and a direct organic rankine cycle system (e.g. as indicated above) comprising two boiler sub-systems for generating power from the waste heat of the pyrolysis oil engine and the pyrolysis gas engine, wherein the waste heat is supplied to a respective boiler of the boiler sub-systems.

According to an aspect of the present disclosure, a method for operating a direct Rankine cycle may comprise circulating an organic working medium through a boiler at a circulation speed such that at least 15%, 20 %, 30 %, 40 %, or 50% of the organic working medium are maintained in the liquid phase when exiting the boiler.

### Industrial Applicability

The term "genset" as used herein comprises inter alia internal combustion engines and steam or combustion turbine based power generating systems.

The term "internal combustion engine" as used herein is not specifically restricted and comprises any engine, in which a fuel combustion process is performed. Examples of fuel include gas or liquid fuel such as diesel, marine diesel, and pyrolysis oil. Examples of internal combustion engines for the herein disclosed configuration of a two-stage turbocharged system include medium speed internal combustion diesel engines, like inline and V-type engines of the series M20, M25, M32, M43 manufactured by Caterpillar Motoren GmbH & Co. KG, Kiel, Germany, operated in a range of 500 to 1000 rpm as well as high speed gas engines, e.g. provided by Caterpillar Motoren GmbH & Co. KG, Kiel

The herein disclosed types of preheating and super-heating may be included in an ORC system alone or in combination/sub-combination.

The modular ORC systems disclosed herein may allow increasing the over all efficiency (e.g. the generated power) of diesel, gas, biomass power plants as well as reducing the operation costs.

Although the preferred embodiments of this invention have been described herein, improvements and modifications may be incorporated without departing from the scope of the following claims.

## Claims

1. A modular heat rejection system configured for being connected to an organic Rankine turbine module (210, 410) to form a direct organic Rankine cycle, the modular heat rejection system (230) comprising:
a vapor separator (23 2) for separating a gaseous phase from a liquid phase of a heated working medium, the vapor separator (232) having at least one heated working medium inlet (248), at least one gaseous phase outlet (250) for the separated working medium gaseous phase, and at least one liquid phase outlet (242) for the separated working medium liquid phase;
at least two boiler sub-systems (234) each of the boiler sub-systems (234) comprising a pump (236) and a boiler (23 8) and being fluidly connected to the at least one liquid phase outlet of the vapor separator (232) and the at least one heated working medium inlet (248) of the vapor separator (232).

2. The modular heat rejection system (230) of claim 1, further comprising a regenerated working medium inlet (252) for mixing regenerated working medium provided by the organic Rankine turbine module (210, 410) with the separated liquid working medium.

3. The modular heat rejection system (230) according to any one of the preceding claims, wherein at least one of the boilers of the boiler sub-systems (234) is configured for heating the working medium with waste heat, e.g., of exhaust gas of a combustion engine.

4. The modular heat rejection system (230) according to any one of the preceding claims, wherein at least one of the boilers (238) of the boiler sub-systems (234) is configured for heating the working medium with waste heat of a high temperature cooling cycle of a combustion engine.

5. The modular heat rejection system (230) according to any one of the preceding claims, wherein at least one of the boilers (238) of the plurality of boiler sub-systems (234) comprises a super-heating system (460) connected with the at least one gaseous phase outlet (250), the super-heating system (460) configured for super-heating the separated working medium gaseous phase before providing the super-heated separated working medium gaseous phase to the organic Rankine turbine module (210, 410).

6. The modular heat rejection system (230) according to any one of the preceding claims, wherein at least one of the boilers (238) of the plurality of boiler sub-systems (234) is a Lamont boiler.

7. The modular heat rejection system (230) according to any one of the preceding claims, further comprising at least one control unit (305) for controlling the circulation speed of the working medium through the boiler sub-systems (234).

8. The modular heat rejection system (230) according to claim 7, wherein the control unit (305) is configured to control the pumps (236) of the boiler sub-systems (234).

9. The modular heat rejection system (230) according to any one of the preceding claims, wherein the working medium is selected from the group of working media comprising saturated and unsaturated hydrocarbons, fluorated hydrocarbons, silicon oils such as siloxane, ammonia, and ammonia-water mixture.

10. A direct organic Rankine cycle system (200) comprising:
a modular heat rejection system (230) according to any one of the preceding claims; and
an organic Rankine turbine module (210, 410).

11. The direct organic Rankine cycle system (200) of claim 10, wherein the organic Rankine turbine module (210, 410) comprises a turbine (212) for driving a generator (214) using the heat of the gaseous phase working medium to generate power.

12. The direct organic Rankine cycle system (200) of claim 11, wherein the organic Rankine turbine module further comprises a regeneration system (216) for changing the working medium into liquid phase.

13. A biomass combined cycle power generating system (100) comprising:
a pyrolysis reactor (110) generating pyrolysis gas and pyrolysis oil from biomass;
a pyrolysis gas engine (130A) for generating power from the pyrolysis gas, thereby producing waste heat;
a pyrolysis oil engine (130B) for generating power from the pyrolysis oil, thereby producing waste heat; and
a direct organic Rankine cycle system (200) according to any of the claims 10 to 12 for generating power from the waste heat of the pyrolysis gas engine (130A) and the waste heat of the pyrolysis oil engine (130B) and direct the organic Rankine cycle system (200) comprising a modular heat rejection system (230),
wherein the waste heat of the pyrolysis gas engine (130A) is supplied to a first boiler of the modular heat rejection system (230) and the waste heat of the pyrolysis oil engine (130B) is supplied to a second boiler of the modular heat rejection system, thereby heating a working medium for driving a single organic Rankine turbine module (212).

14. The biomass combined cycle power generating system (100) of claim 13, wherein the waste heat includes at least one of the heat of exhaust gas and the heat of a coolant system of the pyrolysis gas engine (130A) and/or at least one of the heat of exhaust gas and the heat of a coolant system of the pyrolysis oil engine (130B).

## Patentansprüche

1. Modulares Wärmeabfuhrsystem, welches dazu ausgebildet ist, mit einem organischen Rankine-Turbinenmodul (210, 410) zur Ausbildung eines direkten organischen Rankine-Prozess verbinden zu werden, mit:
einem Dampfabscheider (232) zum Trennen einer gasförmigen Phase von einer flüssigen Phase eines erwärmten Arbeitsmediums, wobei der Dampfabscheider (232) mindestens einen Eingang (248) für erwärmtes Arbeitsmedium, mindestens einen Gasphasenausgang (250) für die separierte Arbeitsmediumgasphase und mindestens einen Flüssigphasenausgang (242) für die getrennte Arbeitsmediumflüssigphase hat
mindestens zwei Boileruntersysteme (234), wobei jedes der Boileruntersysteme (234) eine Pumpe (236) und einen Boiler (238) aufweist und mit dem mindestens einen Flüssigphasenausgang des Dampfabscheiders (232) und dem mindestens einen Eingang für das erwärmte Arbeitsmedium (248) fluid verbunden ist.

2. Modulares Wärmeabfuhrsystem (230) nach Anspruch 1, ferner mit
einem Eingang (252) für regeneriertes Arbeitsmedium zum Mischen von regeneriertem Arbeitsmedium, welches von dem organischen Rankine-Turbinenmodul (210, 410) bereitgestellt wird, mit dem abgetrennten flüssigen Arbeitsmedium.

3. Modulares Wärmeabfuhrsystem (230) gemäß einem der vorhergehenden Ansprüche, wobei mindestens einer der Boiler der Boileruntersysteme (234) zum Erwärmen des Arbeitsmediums mit Abwärme, zum Beispiel von Abgas einer Verbrennungsmaschine ausgebildet ist.

4. Modulares Wärmeabgabesystem (230) gemäß einem der vorhergehenden Ansprüche, wobei einer der Boiler (238) der Boileruntersysteme (234) zum Erwärmen des Arbeitsmediums mit Abwärme eines Hochtemperaturkühlkreislaufes eines Verbrennungsmotors ausgebildet ist.

5. Modulares Wärmeabfuhrsystem (230) gemäß einem der vorhergehenden Ansprüche, wobei mindestens einer der Boiler der Mehrzahl von Boileruntersystemen (234) ein Superheizsystem (460) aufweist, welches mit dem mindestens einen Gasphasenausgang (250) verbunden ist und welches Superheizsystem (460) zum Superheizen der getrennten Arbeitsmediumgasphase ausgebildet ist, bevor die supergeheizte abgetrennte Arbeitsmediumgasphase dem organischen Rankine-Turbinenmodul (210, 410) bereitgestellt wird.

6. Modulares Wärmeabfuhrsystem (230) gemäß einem der vorhergehenden Ansprüche, wobei mindestens einer der Boiler (238) der Mehrzahl von Boileruntersystemen (234) ein Lamont-Boiler ist.

7. Modulares Wärmeabfuhrsystem (230) gemäß einem der vorhergehenden Ansprüche, ferner mit
mindestens einer Steuerungseinheit (305) zum Steuern der Zirkulationsgeschwindigkeit des Arbeitsmediums durch die Boileruntersysteme (234).

8. Modulares Wärmeabfuhrsystem (230) gemäß Anspruch 7, wobei die Steuerungseinheit (305) zum Steuern der Pumpen (236) der Boileruntersysteme (234) ausgebildet ist.

9. Modulares Wärmeabfuhrsystem (230) gemäß einem der vorhergehenden Ansprüche, wobei das Arbeitsmedium aus der Gruppe von Arbeitsmedien ausgebildet ist, die saturierte und unsaturierte Kohlenwasserstoffe, fluorierte Kohlenwasserstoffe, Silikonöle wie Siloxan, Ammoniak, und Ammoniakwassergemisch aufweist.

10. Direktes organisches Rankine-Prozesssystem (200) mit
einem modularen Wärmeabfuhrsystem (230) gemäß einem der vorhergehenden Ansprüche und
einem organischen Rankine-Turbinenmodul (210, 410).

11. Direktes organisches Rankine-Prozesssystem (200) nach Anspruch 10, wobei das Rankine-Turbinenmodul (210, 410) eine Turbine (212) zum Antreiben eines Generators (214) unter Verwendung der Wärme des gasförmigen Arbeitsmediums zur Leistungserzeugung aufweist.

12. Direktes organisches Rankine-Prozesssystem (200) nach Anspruch 11, wobei das organische Rankine-Turbinenmodul ferner ein Regenerationssystem (216) zum Überführen des Arbeitsmediums in die flüssige Phase aufweist.

13. Biomassen-Kombileistungserzeugungssystem (100) mit einem Pyrolysereaktor (110) zum Erzeugen von Pyrolysegas und Pyrolyseöl aus Biomasse,
einem Pyrolysegasmotor (130A) zur Leistungserzeugung aus dem Pyrolysegas, wodurch Abwärme erzeugt wird,
einem Pyrolyseölmotor (130B) zur Liestungserzeugung aus dem Pyrolyseöl, wobei dadurch Abwärme erzeugt wird, und
einem direkten organischen Rankine-Prozesssystem (200) gemäß einem der Ansprüche 10 bis 12 zur Leistungserzeugung aus der Abwärme des Pyrolysegasmotors (130A) und der Abwärme des Pyrolyseölmotors (130B), wobei das organische Rankine-Prozesssystem (200) ein modulares Wärmeabfuhrsystem (230) aufweist,
wobei die Abwärme des Pyrolysegasmotors (130A) einem ersten Boiler des modularen Wärmeabfuhrsystems (230) zugeführt wird und die Abwärme des Pyrolyseölmotors (130B) einem zweiten Boiler des modularen Wärmeabfuhrsystems zugeführt wird, wodurch ein Arbeitsmedium zum Antreiben eines gemeinsamen organischen Rankine-Turbinenmoduls (212) erwärmt wird.

14. Biomassen-Kombileistungserzeugungssystem (100) nach Anspruch 13, wobei die Abwärme umfasst die Wärme des Abgüsse und die Wärme eines Kühlsystems des Pyrolysegasmotors (130A) und/oder die Wärme des Abgases und die Wärme eines Kühlsystems des Pyrolyseölmotors (130B).

## Revendications

1. Système de rejet de chaleur modulaire, configuré de manière à être connecté à un module de turbine de Rankine organique (210, 410) afin de former un cycle de Rankine organique direct, le système de rejet de chaleur modulaire (230) comprenant:
un séparateur de vapeur (232) pour séparer une phase gazeuse d'une phase liquide d'un fluide moteur chauffé, le séparateur de vapeur (232) présentant au moins une entrée de fluide moteur chauffé (248), au moins une sortie de phase gazeuse (250) pour la phase gazeuse de fluide moteur séparé, et au moins une sortie de phase liquide (242) pour la phase liquide de fluide moteur séparé;
au moins deux sous-systèmes de chaudière (234), chacun des sous-systèmes de chaudière (234) comprenant une pompe (236) et une chaudière (238) et étant connecté de façon fluidique à ladite au moins une sortie de phase liquide du séparateur de vapeur (232) et à ladite au moins une entrée de fluide moteur chauffé (248) du séparateur de vapeur (232).

2. Système de rejet de chaleur modulaire (230) selon la revendication 1, comprenant en outre une entrée de fluide moteur régénéré (252) pour mélanger un fluide moteur régénéré fourni par le module de turbine de Rankine organique (210, 410) avec le fluide moteur liquide séparé.

3. Système de rejet de chaleur modulaire (230) selon l'une quelconque des revendications précédentes, dans lequel au moins une des chaudières des sous-systèmes de chaudière (234) est configurée de manière à chauffer le fluide moteur avec de la chaleur perdue, par exemple un gaz d'échappement d'un moteur à combustion.

4. Système de rejet de chaleur modulaire (230) selon l'une quelconque des revendications précédentes, dans lequel au moins une des chaudières (238) des sous-systèmes de chaudière (234) est configurée de manière à chauffer le fluide moteur avec de la chaleur perdue d'un cycle de refroidissement à haute température d'un moteur à combustion.

5. Système de rejet de chaleur modulaire (230) selon l'une quelconque des revendications précédentes, dans lequel au moins une des chaudières (238) de la pluralité de sous-systèmes de chaudière (234) comprend un système de surchauffe (460) qui est connecté à ladite au moins une sortie de phase gazeuse (250), le système de surchauffe (460) étant configuré de manière à surchauffer la phase gazeuse de fluide moteur séparé avant la fourniture de la phase gazeuse de fluide moteur séparé surchauffée au module de turbine de Rankine organique (210, 410).

6. Système de rejet de chaleur modulaire (230) selon l'une quelconque des revendications précédentes, dans lequel au moins une des chaudières (238) de la pluralité de sous-systèmes de chaudière (234) est une chaudière LaMont.

7. Système de rejet de chaleur modulaire (230) selon l'une quelconque des revendications précédentes, comprenant en outre au moins une unité de commande (305) pour commander la vitesse de circulation du fluide moteur à travers les sous-systèmes de chaudière (234).

8. Système de rejet de chaleur modulaire (230) selon la revendication 7, dans lequel l'unité de commande (305) est configurée de manière à commander les pompes (236) des sous-systèmes de chaudière (234).

9. Système de rejet de chaleur modulaire (230) selon l'une quelconque des revendications précédentes, dans lequel le fluide moteur est sélectionné dans le groupe de fluides moteurs comprenant des hydrocarbures saturés et insaturés, des hydrocarbures fluorés, des huiles silicones telles que le siloxane, l'ammoniaque et un mélange d'ammoniaque et d'eau.

10. Système de cycle de Rankine organique direct (200), comprenant:
un système de rejet de chaleur modulaire (230) selon l'une quelconque des revendications précédentes; et
un module de turbine de Rankine organique (210, 410).

11. Système de cycle de Rankine organique direct (200) selon la revendication 10, dans lequel le module de turbine de Rankine organique (210, 410) comprend une turbine (212) pour entraîner un générateur (214) en utilisant la chaleur d'un fluide moteur en phase gazeuse pour générer de l'énergie.

12. Système de cycle de Rankine organique direct (200) selon la revendication 11, dans lequel le module de turbine de Rankine organique comprend en outre un système de régénération (216) pour changer le fluide moteur en une phase liquide.

13. Système de génération d'énergie à cycle combiné avec la biomasse (100), comprenant:
un réacteur de pyrolyse (11) générant un gaz de pyrolyse et une huile de pyrolyse à partir de la biomasse;
un moteur à gaz de pyrolyse (130A) pour générer de l'énergie à partir du gaz de pyrolyse, produisant de ce fait de la chaleur perdue;
un moteur à huile de pyrolyse (130B) pour générer de l'énergie à partir de l'huile de pyrolyse, produisant de ce fait de la chaleur perdue; et
un système de cycle de Rankine organique direct (200) selon l'une quelconque des revendications 10 à 12 pour générer de l'énergie à partir de la chaleur perdue du moteur à gaz de pyrolyse (130A) et de la chaleur perdue du moteur à huile de pyrolyse (130B), et le système de cycle de Rankine organique direct (200) comprenant un système de rejet de chaleur modulaire (230),
dans lequel la chaleur perdue du moteur à gaz de pyrolyse (130A) est fournie à une première chaudière du système de rejet de chaleur modulaire (230) et la chaleur perdue du moteur à huile de pyrolyse (130B) est fournie à une deuxième chaudière du système de rejet de chaleur modulaire, chauffant de ce fait un fluide moteur pour entraîner un module de turbine de Rankine organique simple (212).

14. Système de génération d'énergie à cycle combiné avec la biomasse (100) selon la revendication 13, dans lequel la chaleur perdue comprend au moins une parmi de la chaleur d'un gaz d'échappement et de la chaleur d'un système de liquide de refroidissement du moteur à gaz de pyrolyse (130A) et/ou au moins une parmi de la chaleur d'un gaz d'échappement et de la chaleur d'un système de liquide de refroidissement du moteur à huile de pyrolyse (130B).
